# EUROPEAN PATENT SPECIFICATION

(11) **EP 1 356 454 B1**
(45) Date of publication and mention of the grant of the patent: **01.03.2006**
(21) Application number: 01273321.8
(22) Date of filing: 18.12.2001
(51) Int. Cl.: G10L 19/00

(54) **WIDEBAND SIGNAL TRANSMISSION SYSTEM**
BREITBAND-SIGNALÜBERTRAGUNGSSYSTEM
SYSTEME DE TRANSMISSION DE SIGNAL LARGE BANDE

(30) Priority: 19.01.2001 EP 01200187
(43) Date of publication of application: 29.10.2003
(73) Proprietor: Koninklijke Philips Electronics N.V., 5621 BA Eindhoven (NL)
(72) Inventor: GERRITS, Andreas, J., NL-5656 AA Eindhoven (NL)
(74) Representative: Deguelle, Wilhelmus H. G.
(86) International application number: PCT/IB2001/002642
(87) International publication number: WO 2002/058052

(56) References cited:
- EP-A- 0 718 982
- US-A- 6 137 915
- GERARD AGUILAR ET AL: "An embedded sinusoidal transform codec with measured phases and sampling rate scalability" IEEE INTERNATIONAL CONFERENCE ON ACOUSTICS, SPEECH, AND SIGNAL PROCESSING , vol. 2, 5 - 9 June 2000, pages 1141-1144, XP002191196 Istanbul, Turkey cited in the application
- EPPS J ET AL: "A new technique for wideband enhancement of coded narrowband speech" SPEECH CODING PROCEEDINGS, 1999 IEEE WORKSHOP ON PORVOO, FINLAND 20-23 JUNE 1999, PISCATAWAY, NJ, USA,IEEE, US, 20 June 1999 (1999-06-20), pages 174-176, XP010345554 ISBN: 0-7803-5651-9 cited in the application

## Description

The invention relates to an audio transmission system comprising a transmitter and a receiver, wherein the transmitter is arranged for transmitting an input signal to the receiver via a transmission channel,
the transmitter comprising a splitter for splitting up the input signal into at least first and second frequency band signals, the transmitter further comprising a first encoder for encoding the first frequency band signal into a first encoded frequency band signal and a second encoder for encoding the second frequency band signal into a second encoded frequency band signal, the transmitter being arranged for transmitting the first and second encoded frequency band signals via the transmission channel to the receiver,
the receiver comprising a first decoder for decoding the first encoded frequency band signal into a first decoded frequency band signal and a second decoder for decoding the second encoded frequency band signal into a second decoded frequency band signal, the receiver further comprising a combiner for combining the first and second decoded frequency band signals into an output signal, the receiver further comprising reconstruction means for reconstructing the second decoded frequency band signal when the second decoded frequency band signal is not available.

The invention further relates to an audio receiver for receiving, via a transmission channel, first and second encoded frequency band signals from an audio transmitter, to a method of transmitting an audio input signal via a transmission channel, to a method of receiving, via a transmission channel, first and second encoded frequency band signals representing an audio signal and to a speech decoder for decoding first and second encoded frequency band speech signals.

A transmission system according to the preamble is known from the paper "An embedded sinusoidal transform codec with measured phases and sampling rate scalability" by Gerard Aguilar et. al. in the proceedings of the 2000 IEEE International Conference on Acoustics, Speech, and Signal Processing, Istanbul, Turkey, 5-9 June 2000, Volume II, pp. 1141-1144.

Such transmission systems may for example be used for transmission of speech signals or audio signals via a transmission medium such as a radio channel, a coaxial cable or an optical fibre. Such transmission systems can also be used for recording of speech signals on a recording medium such as a magnetic tape or disc. Possible applications are mobile phones, voice over IP (Internet) communication, automatic answering machines and dictating machines.

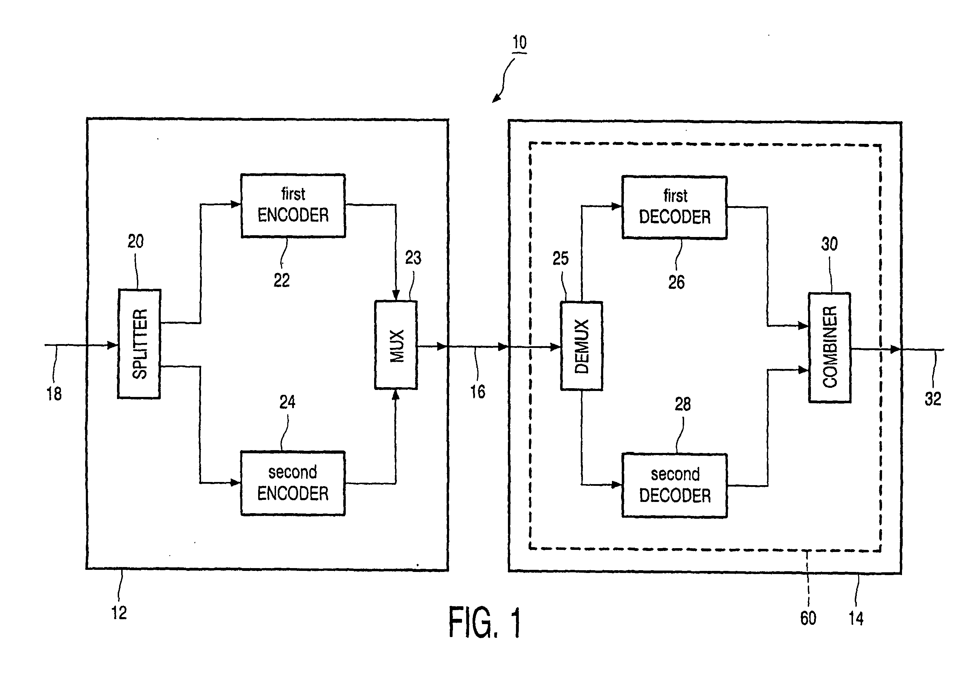

Fig. 1 shows a block diagram of the known transmission system, which transmission system is a so-called scalable wideband speech transmission system. This transmission system comprises a transmitter 12 and a receiver 14. The transmitter 12 and the receiver 14 are coupled via a transmission channel 16. An input speech signal that is supplied to an input 18 of the transmitter 12 is split up into first and second frequency band signals (i.e. spectral portions) by means of a splitter 20. The transmitter 12 further comprises first and second encoders 22 and 24 for encoding the first and second frequency band signals into first and second encoded frequency band signals. These first and second encoded frequency band signals are multiplexed by a multiplexer 23 into a multiplexed signal, which multiplexed signal (carrying the first and second encoded frequency band signals) is transmitted by the transmitter 12 via the transmission channel 16 to the receiver 14. The receiver 14 comprises a speech decoder 60 having a demultiplexer 25 for demultiplexing the multiplexed signal into the first and second encoded frequency band signals and first and second decoders 26 and 28 for decoding the first and second encoded frequency band signals into first and second decoded frequency band signals. The speech decoder 60 further comprises a combiner 30 for combining the first and second decoded frequency band signals into an output signal which is supplied to an output 32 of the receiver 14. Preferably, the first and second encoders 22 and 24 and the first and second decoders 26 and 28 are specifically designed for encoding and decoding the first and second frequency band signals. For example, the first frequency band signal may be a so-called narrowband speech signal having a frequency range of 50-4000 Hz and the second frequency band signal may be a so-called highband speech signal having a frequency range of 4000-7000 Hz. The narrowband speech signal may be encoded and decoded by dedicated narrowband speech coders and decoders. Similarly, the highband speech signal may be encoded and decoded by dedicated highband speech coders and decoders. The decoded narrowband and highband speech signals are combined by the combiner 30 into a so-called wideband speech signal with a frequency range of 50-7000 Hz.

An advantage of such a transmission system is that the narrowband signal can be decoded regardless of the highband signal. Normally both the narrowband and the highband signals are received by the receiver 14 and the speech decoder 60 is able to produce a high quality wideband speech output signal with a frequency range of 50-7000 Hz. However, when the transmission channel 16 is congested it might occur that frames of the highband signal are not received or are not received correctly by the receiver 14. In such a case the speech decoder 60 is still able to decode the corresponding frames of the narrowband signal and to produce a lower quality narrowband speech output signal with a frequency range of 50-4000 Hz.

The event that a certain frame is not received or is incorrectly received is called a frame erasure. It may be desirable for a transmission system to gracefully handle such frame erasures. In the known transmission system frame erasures are handled either by time scaling (i.e. compressing or expanding in the time domain) the received frames adjacent to the erased frame, or by extrapolating certain parameters of the most recently received frame.

The handling of frame erasures in the known transmission system suffers from a number of drawbacks which negatively influence the quality of the reconstructed speech signal. The handling of frame erasures by time scaling the received frames adjacent to the erased frames is relatively complex and, more importantly, it introduces extra delays because later received frames have to be manipulated in order to correct the erased frames. Furthermore, the handling of frame erasures by extrapolating the parameters of the most recently received frame doesn't always produce the desired result. For instance, for an erased frame which corresponds to the beginning of a new sound it is not possible to reconstruct a similar frame based on the parameters of the last received frame (which corresponds to a different sound).

It is an object of the invention to provide a transmission system as described in the opening paragraph which does not suffer from these drawbacks. This object is achieved in the transmission system according to the invention, which transmission system is characterised in that the reconstruction means are arranged for reconstructing the second decoded frequency band signal from the first decoded frequency band signal. By reconstructing the second decoded frequency band signal from the first decoded frequency band signal, i.e. on the basis of the first decoded frequency band signal, it is possible to avoid the delays which are involved with the time scaling method. Furthermore, the transmission system according to the invention does not suffer from the disadvantage of the method of handling frame erasures by extrapolating certain parameters of the most recently received frame, which method does not produce a correct result when the erased frame corresponds to the beginning of a new sound. This disadvantage is avoided by reconstructing a frame of the second decoded frequency band signal corresponding to a certain sound from a frame of the first decoded frequency band signal corresponding to the same sound.

US Patent 6,137,915 discloses an apparatus and a method for concealing errors in a hierarchical subband video coding/decoding system. Error concealment of a corrupted or missing coefficient is achieved by using uncorrupted coefficient(s) or a window of coefficients corresponding to the same spatial location from other subbands.

An embodiment of the transmission system according to the invention is characterised in that the reconstruction means are arranged for reconstructing the second decoded frequency band signal from the first decoded frequency band signal by extending a bandwidth of the first decoded frequency band signal. By means of bandwidth extension a signal with a relatively narrow frequency band can be extended into a signal with a relatively wide frequency band. Several techniques for extending the bandwidth of narrowband signal are known from the paper "A new technique for wideband enhancement of coded narrowband speech", IEEE Speech Coding Workshop 1999, June 20-23, 1999, Porvoo, Finland. These techniques are used to improve the speech quality in a narrowband network. An advantage of the present embodiment of the transmission system according to the invention is that bandwidth extension is a computationally efficient way to reconstruct the second decoded frequency band signal from the first decoded frequency band signal. Moreover, by applying bandwidth extension a very good reconstruction of the erased frames of the second decoded frequency band signal can be obtained, which reconstruction is preferable over simply muting the second decoded frequency band signal.

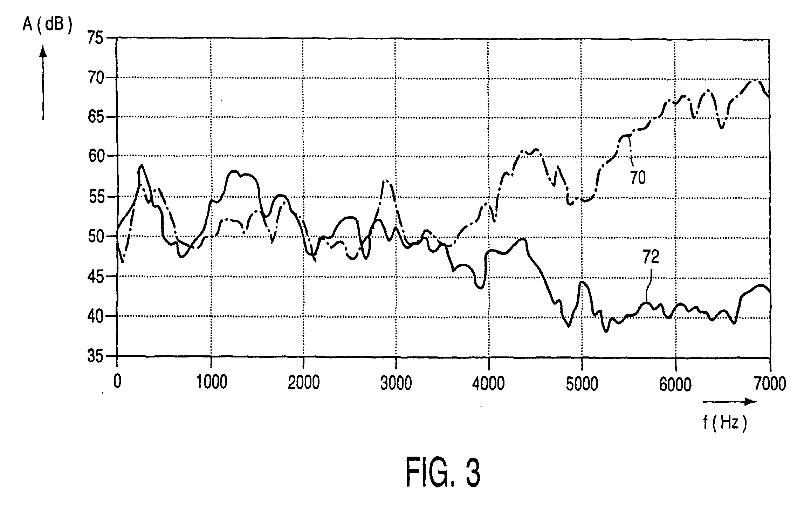

An embodiment of the transmission system according to the invention is characterised in that the reconstruction means are arranged for reconstructing a present frame of the second decoded frequency band signal from a present frame of the first decoded frequency band signal and from a previous frame of the second decoded frequency band signal. By reconstructing a present frame of the second decoded frequency band signal on the basis of a present frame of the first decoded frequency band signal (for instance by means of bandwidth extension) and on the basis of (parameters of) a previous frame of the second decoded frequency band signal an even better reconstruction can be achieved. In some cases it is not always possible to correctly reconstruct a frame of the second decoded frequency band signal on the basis of only the first decoded frequency band signal. For instance, when bandwidth extension is applied to reconstruct a highband speech signal from a narrowband speech signal it is difficult to distinguish between /s/ and /f/ sounds. The reason for this is that these /s/ and /f/ sounds have spectra which are similar in their narrowband part and which are different in their highband part (see Fig. 3 in which graph 70 shows the spectrum of the /s/ sound and in which graph 72 shows the spectrum of the /f/ sound). By incorporating information from a previous frame of the second decoded frequency band signal it is clear which of the /s/ and /f/ sounds was actually included and a correct reconstruction of the second decoded frequency band signal can be made.

A further embodiment of the transmission system according to the invention is characterised in that the first frequency band signal and the first decoded frequency band signal are low frequency band signals and in that the second frequency band signal and the second decoded frequency band signal are high frequency band signals. For example, the transmission system according to the invention can advantageously be used to reconstruct a highband speech signal from a narrowband speech signal.

The above object and features of the present invention will be more apparent from the following description of the preferred embodiments with reference to the drawings, wherein:
Figure 1 shows a block diagram of a prior art transmission system,
Figure 2 shows a block diagram of an embodiment of the transmission system according to the invention,
Figure 3 shows spectra of /s/ and /f/ sounds and will be used to explain the operation of the transmission system according to the invention.

In the Figures, identical parts are provided with the same reference numbers.

Figure 1 shows a block diagram of a prior art transmission system, which transmission system is a so-called scalable wideband speech transmission system. This transmission system 10 comprises a transmitter 12 and a receiver 14. The transmitter 12 and the receiver 14 are coupled via a transmission channel 16. An input speech signal that is supplied to an input 18 of the transmitter 12 is split up into first and second frequency band signals (i.e. spectral portions) by means of a splitter 20. The transmitter 12 further comprises first and second encoders 22 and 24 for encoding the first and second frequency band signals into first and second encoded frequency band signals. These first and second encoded frequency band signals are multiplexed by a multiplexer 23 into a multiplexed signal, which multiplexed signal (carrying the first and second encoded frequency band signals) is transmitted by the transmitter 12 via the transmission channel 16 to the receiver 14. The receiver 14 comprises a speech decoder 60 having a demultiplexer 25 for demultiplexing the multiplexed signal into the first and second encoded frequency band signals and first and second decoders 26 and 28 for decoding the first and second encoded frequency band signals into first and second decoded frequency band signals. The speech decoder 60 further comprises a combiner 30 for combining the first and second decoded frequency band signals into an output signal which is supplied to an output 32 of the receiver 14. Preferably, the first and second encoders 22 and 24 and the first and second decoders 26 and 28 are specifically designed for encoding and decoding the first and second frequency band signals. For example, the first frequency band signal may be a so-called narrowband speech signal having a frequency range of 50-4000 Hz and the second frequency band signal may be a so-called highband speech signal having a frequency range of 4000-7000 Hz. The narrowband speech signal may be encoded and decoded by dedicated narrowband speech coders and decoders. Similarly, the highband speech signal may be encoded and decoded by dedicated highband speech coders and decoders. The decoded narrowband and highband speech signals are combined by the combiner 30 into a so-called wideband speech signal with a frequency range of 50-7000 Hz.

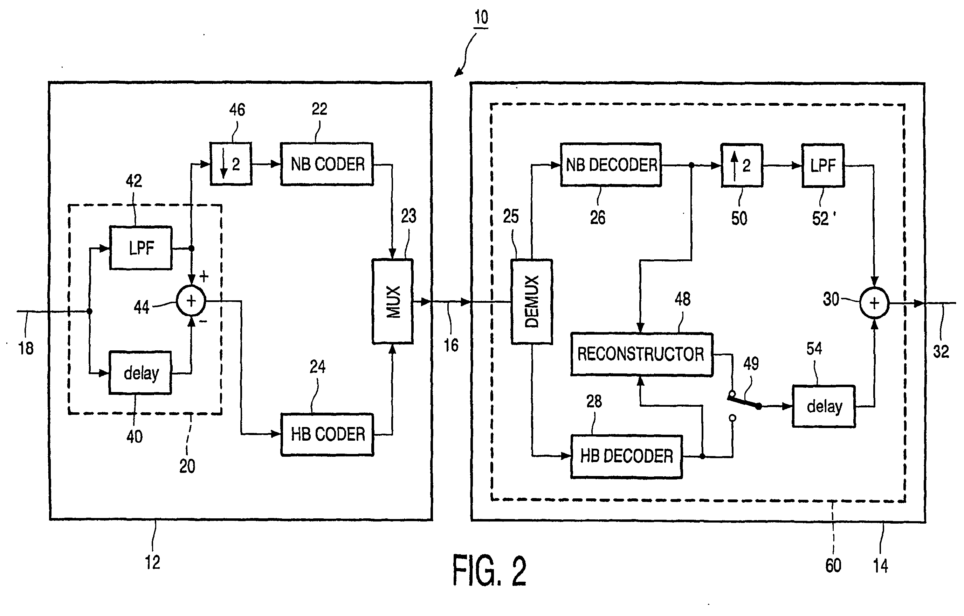

Figure 2 shows a block diagram of an embodiment of the transmission system 10 according to the invention. The transmission system 10 comprises a transmitter 12 for transmitting an input signal to a receiver 14 via a transmission channel 16. The input signal is supplied to an input 18 of the transmitter 12. The transmitter 12 comprises a splitter 20 for splitting up the input signal into a narrowband signal (i.e. the first frequency band signal) and a highband signal (i.e. the second frequency band signal). The splitter 20 comprises a low pass filter 42, a delay element 40 and a subtracter 44. The input signal is supplied to the low pass filter 42 and the delay element 40. The narrowband signal is the result of the filtering of the input signal by the low pass filter 42. The highband signal is the result of subtracting the delayed input signal from the narrowband signal in the subtracter 44. It is important for the low pass filter 42 to have a linear phase characteristic. This may be achieved, for example, by using a finite impulse response filter having a length of 81 so that the filtered signal is delayed by 40 samples. For speech the low pass filter 42 may have a pass band between 0 and 3400 Hz and a stop band between 4000 and 8000 Hz. The delay element 40 is used for compensating the delay that occurs in the low pass filter 42, so that the input signals of the subtracter 44 have a desired phase relation.

Alternatively, the highband signal may be derived from the input signal by means of a high pass filter (not shown), which is used in stead of the delay element 40 and the subtracter 44.

The narrowband signal is down sampled by a down sampler 46 and applied to a narrowband coder 22 (i.e. the first encoder). This narrowband coder 22 is a coder which is optimized for signals having a narrowband frequency range as described, for example, in ITU standards G.729 or G.728 or in MPEG-4 CELP. The type or operation of this narrowband coder 22 is unimportant to the implementation of the invention. The narrowband coder 22 generates an encoded narrowband signal (i.e. the first encoded frequency band signal). The highband signal is supplied to a highband coder 24 (i.e. the second encoder) for encoding the highband signal into an encoded highband signal (i.e. the second encoded frequency band signal). This highband coder 24 is a coder which is optimized for signals having a highband frequency range as known from, for example, MPEG-4 CELP. The type or operation of this highband coder 24 is unimportant to the implementation of the invention. The encoded narrowband and highband signals are multiplexed in a multiplexer 23 into a multiplexed signal and this multiplexed signal (carrying the encoded narrowband and highband signals) is transmitted by the transmitter 12 via the transmission channel 16 to the receiver 14.

The receiver 14 comprises a speech decoder 60. The speech decoder 60 comprises a demultiplexer 25 for demultiplexing the multiplexed signal into the encoded narrowband and highband signals and a narrowband decoder 26 (i.e. the first decoder) for decoding the encoded narrowband signal and a highband decoder 28 (i.e. the second decoder) for decoding the encoded highband signal. The decoded narrowband signal (i.e. the first decoded frequency band signal) is up sampled by an up sampler 50. In order to filter out undesired highband frequency components which may be introduced in the decoded narrowband signal by the decoder 26 and/or the up sampler 50 the up sampled decoded narrowband signal is filtered by a low pass filter 52. The frequency characteristic of this low pass filter 52 is comparable to the frequency characteristic of the low pass filter 42 in the transmitter 12.

Normally, when a frame of the decoded highband signal is available, the decoded highband signal is supplied via a switch 49 (which is in the lower position) and a delay element 54 to an adder 30 (i.e. the combiner). The decoded narrowband signal (which has been up sampled by the up sampler 50 and filtered by the low pass filter 52) is also supplied to the adder 30. The adder 30 combines the decoded narrowband and highband signals into an output signal which is supplied to an output 32 of the receiver 14. Since it is possible for various signal delays to arise during the decoding of the encoded narrowband and highband signals, the delay element 54 is provided for delaying the decoded highband signal. In the case where the decoded narrowband signal experiences less delay than the decoded highband signal, the delay element 54 may be inserted between the low pass filter 52 and the adder 30.

The speech decoder 60 further comprises a reconstructor 48 (i.e the reconstruction means) for reconstructing (for example by bandwidth extension of the decoded narrowband signal) the decoded highband signal when the decoded highband signal is not available. A frame of the decoded highband signal may not be available, for example, because the corresponding frame of the encoded highband signal was not received at all or because it was not received correctly or because it couldn't be decoded correctly. In such a case the reconstructor 48 reconstructs the missing frame of the decoded highband signal and it is this reconstructed frame that is supplied via the switch 49 (in the upper position) and the delay element 54 to the adder 30. The reconstruction of the missing frame by the reconstructor 48 is done on the basis of a (present) frame of the decoded narrowband signal which is supplied to the reconstructor 48. In addition, the reconstruction of the missing frame may also be (partly) based on (certain parameters of) a previous frame (or previous frames) of the decoded highband signal which is also supplied to the reconstructor 48.

One of the main drawbacks of using bandwidth extension is that there may be multiple extensions of the extended (narrowband) signal. This is very obvious for sounds like /s/ and /f/, whose spectra are similar in their narrowband part and different in the highband part. Figure 3 shows two graphs 70 and 72 illustrating the spectra of these /s/ and /f/ sounds. In this Figure 3, horizontally the frequency (in Hertz) is plotted, while vertically the amplitude (in dB) of the spectrum is plotted. Graph 70 corresponds to the spectrum of the /s/ sound, while graph 72 corresponds to the spectrum of the /f/ sound. A bandwidth extension system only has the narrowband part available and cannot distinguish between these two sounds. Hence, the extension of the narrowband part of these sounds may lead to audible artefacts.

Suppose that in the transmission system bandwidth extension is used for concealing frame erasures and suppose that the previous frame of data has been received correctly. In the current (present) frame, only the data describing the narrowband part of the wideband signal has been received correctly. The data describing the highband part is lost or erroneous. According to the invention, the highband part can be reconstructed by means of bandwidth extension. This can lead to artefacts as is described above. However, if the highband of the previous frame is received correctly, this can be used to correct some of the errors that are made by extending the bandwidth of the narrowband signal. An important attribute or parameter is the energy of the highband signal. Instead of only using the energy that is extrapolated from the narrowband signal by the bandwidth extension system, also the energy of the highband from the previously (correctly) received frames can be used. The extrapolated highband signal is then scaled by an averaged value of these energies. For example, if a transmission error in the highband data occurs during an /s/-sound, the bandwidth extension system will under-estimate the energy in the highband and as a result it will sound like an /f/. However, if one or more of the previous frames already represented the /s/-sound, the energy of these highband signals can be used to correct the energy level in the highband signal obtained from the bandwidth extension system. This additional information can solve which of the sounds is under consideration. This is an improvement of the system where only bandwidth extension is used for error concealment. In this implementation, the energy of previous frames is used in combination of bandwidth extension. However, also other parameters could be used for this, like for instance the spectral envelope or the pitch period.

Although in the above only a coding scheme having two frequency bands is described, the invention is also applicable to coding schemes having more than two frequency bands. The reconstruction means 48 (with the switch 49) and the speech coder 60 may be implemented by means of digital hardware or by means of software which is executed by a digital signal processor or by a general purpose microprocessor. Furthermore, the reconstruction means 48 may be implemented in the frequency domain or in the time domain.

The scope of the invention is not limited to the embodiments explicitly disclosed. The invention is embodied in each new characteristic and each combination of characteristics. Any reference signs do not limit the scope of the claims. The word "comprising" does not exclude the presence of other elements or steps than those listed in a claim. Use of the word "a" or "an" preceding an element does not exclude the presence of a plurality of such elements.

## Claims

1. An audio transmission system (10) comprising a transmitter (12) and a receiver (14), wherein the transmitter (12) is arranged for transmitting an input signal to the receiver (14) via a transmission channel (16),
the transmitter (12) comprising a splitter (20) for splitting up the input signal into at least first and second frequency band signals, the transmitter (12) further comprising a first encoder (22) for encoding the first frequency band signal into a first encoded frequency band signal and a second encoder (24) for encoding the second frequency band signal into a second encoded frequency band signal, the transmitter (12) being arranged for transmitting the first and second encoded frequency band signals via the transmission channel (16) to the receiver (14),
the receiver (14) comprising a first decoder (26) for decoding the first encoded frequency band signal into a first decoded frequency band signal and a second decoder (28) for decoding the second encoded frequency band signal into a second decoded frequency band signal, the receiver (14) further comprising a combiner (30) for combining the first and second decoded frequency band signals into an output signal, the receiver (14) further comprising reconstruction means (48) for reconstructing the second decoded frequency band signal when the second decoded frequency band signal is not available,
**characterized in that** the reconstruction means (48) are arranged for reconstructing the second decoded frequency band signal from the first decoded frequency band signal.

2. The audio transmission system (10) according to claim 1, **characterized in that** the reconstruction means(48) are arranged for reconstructing the second decoded frequency band signal from the first decoded frequency band signal by extending a bandwidth of the first decoded frequency band signal.

3. The audio transmission system (10) according to claim 1, **characterized in that** the reconstruction means (48) are arranged for reconstructing a present frame of the second decoded frequency band signal from a present frame of the first decoded frequency band signal and from a previous frame of the second decoded frequency band signal.

4. The audio transmission system (10) according to claim 1, **characterized in that** the first frequency band signal and the first encoded frequency band signal and the first decoded frequency band signal are signals having a low frequency band and **in that** the second frequency band signal and the second encoded frequency band signal and the second decoded frequency band signal are signals having a high frequency band.

5. An audio receiver (14) for receiving, via a transmission channel (16), first and second encoded frequency band signals from an audio transmitter (12), the audio receiver (14) comprising a first decoder (26) for decoding the first encoded frequency band signal into a first decoded frequency band signal and a second decoder (28) for decoding the second encoded frequency band signal into a second decoded frequency band signal, the receiver (14) further comprising a combiner (30) for combining the first and second decoded frequency band signals into an output signal, the audio receiver (14) further comprising reconstruction means (48) for reconstructing the second decoded frequency band signal when the second decoded frequency band signal is not available,
**characterized in that** the reconstruction means (48) are arranged for reconstructing the second decoded frequency band signal from the first decoded frequency band signal.

6. The audio receiver (14) according to claim 5, **characterized in that** the reconstruction means (48) are arranged for reconstructing the second decoded frequency band signal from the first decoded frequency band signal by extending a bandwidth of the first decoded frequency band signal.

7. The audio receiver (14) according to claim 5, **characterized in that** the reconstruction means (48) are arranged for reconstructing a present frame of the second decoded frequency band signal from a present frame of the first decoded frequency band signal and from a previous frame of the second decoded frequency band signal.

8. The audio receiver (14) according to claim 5, **characterized in that** the first encoded frequency band signal and the first decoded frequency band signal are signals having a low frequency band and **in that** the second encoded frequency band signal and the second decoded frequency band signal are signals having a high frequency band.

9. A method of transmitting an audio input signal via a transmission channel (16), the method comprising the steps of:
- splitting up the audio input signal into at least first and second frequency band signals,
- encoding the first frequency band signal into a first encoded frequency band signal and encoding the second frequency band signal into a second encoded frequency band signal,
- transmitting the first and second encoded frequency band signals via the transmission channel (16),
- decoding the first encoded frequency band signal into a first decoded frequency band signal and decoding the second encoded frequency band signal into a second decoded frequency band signal,
- combining the first and second decoded frequency band signals into an audio output signal, and
- reconstructing the second decoded frequency band signal when the second decoded frequency band signal is not available,
**characterized in that** the second decoded frequency band signal is reconstructed from the first decoded frequency band signal.

10. The method of transmitting an audio input signal via a transmission channel (16) according to claim 9, **characterized in that** the second decoded frequency band signal is reconstructed from the first decoded frequency band signal by extending a bandwidth of the first decoded frequency band signal.

11. The method of transmitting an audio input signal via a transmission channel (16) according to claim 9, **characterized in that** a present frame of the second decoded frequency band signal is reconstructed from a present frame of the first decoded frequency band signal and from a previous frame of the second decoded frequency band signal.

12. The method of transmitting an audio input signal via a transmission channel (16) according to claim 9, **characterized in that** the first frequency band signal and the first encoded frequency band signal and the first decoded frequency band signal are signals having a low frequency band and **in that** the second frequency band signal and the second encoded frequency band signal and the second decoded frequency band signal are signals having a high frequency band.

13. A method of receiving, via a transmission channel (16), first and second encoded frequency band signals representing an audio signal, the method comprising the steps of:
- decoding the first encoded frequency band signal into a first decoded frequency band signal and decoding the second encoded frequency band signal into a second decoded frequency band signal,
- combining the first and second decoded frequency band signals into an output signal, and
- reconstructing the second decoded frequency band signal when the second decoded frequency band signal is not available,
**characterized in that** the second decoded frequency band signal is reconstructed from the first decoded frequency band signal.

14. The method of receiving, via a transmission channel (16), first and second encoded frequency band signals according to claim 13, **characterized in that** the second decoded frequency band signal is reconstructed from the first decoded frequency band signal by extending a bandwidth of the first decoded frequency band signal.

15. The method of receiving, via a transmission channel (16), first and second encoded frequency band signals according to claim 13, **characterized in that** a present frame of the second decoded frequency band signal is reconstructed from a present frame of the first decoded frequency band signal and from a previous frame of the second decoded frequency band signal.

16. The method of receiving, via a transmission channel (16), first and second encoded frequency band signals according to claims 13, **characterized in that** the first encoded frequency band signal and the first decoded frequency band signal are signals having a low frequency band and **in that** the second encoded frequency band signal and the second decoded frequency band signal are signals having a high frequency band.

17. A speech decoder (60) for decoding first and second encoded frequency band speech signals, the speech decoder (60) comprising a first decoder (26) for decoding the first encoded frequency band speech signal into a first decoded frequency band speech signal and a second decoder (28) for decoding the second encoded frequency band speech signal into a second decoded frequency band speech signal, the speech decoder (60) further comprising a combiner (30) for combining the first and second decoded frequency band speech signals into an output signal, the speech decoder (60) further comprising reconstruction means (48) for reconstructing the second decoded frequency band speech signal when the second decoded frequency band signal is not available,
**characterized in that** reconstruction means (48) are arranged for reconstructing the second decoded frequency band speech signal from the first decoded frequency band speech signal.

18. The speech decoder (60) according to claim 17, **characterized in that** the reconstruction means (48) are arranged for reconstructing the second decoded frequency band speech signal from the first decoded frequency band speech signal by extending a bandwidth of the first decoded frequency band speech signal.

19. The speech decoder (60) according to claim 17, **characterized in that** the reconstruction means (48) are arranged for reconstructing a present frame of the second decoded frequency band speech signal from a present frame of the first decoded frequency band speech signal and from a previous frame of the second decoded frequency band speech signal.

20. The speech decoder (60) according to claim 17, **characterized in that** the first encoded frequency band speech signal and the first decoded frequency band speech signal are signals having a low frequency band and **in that** the second encoded frequency band speech signal and the second decoded frequency band speech signal are signals having a high frequency band.

## Revendications

1. Système de transmission audio (10) comprenant un émetteur (12) et un récepteur (14), dans lequel l'émetteur (12) est à même de transmettre un signal d'entrée au récepteur (14) par le biais d'un canal de transmission (16);
l'émetteur (12) comprenant un séparateur (20) pour séparer le signal d'entrée en au moins des premier et deuxième signaux dans une bande de fréquences, l'émetteur (12) comprenant en outre un premier codeur (22) pour coder le premier signal dans une bande de fréquences en un premier signal dans une bande de fréquences codé et un deuxième codeur (24) pour coder le deuxième signal dans une bande de fréquences en un deuxième signal dans une bande de fréquences codé, l'émetteur (12) étant à même de transmettre au récepteur (14) les premier et deuxième signaux dans une bande de fréquences codés par le biais du canal de transmission (16);
le récepteur (14) comprenant un premier décodeur (26) pour décoder le premier signal dans une bande de fréquences codé en un premier signal dans une bande de fréquences décodé et un deuxième décodeur (28) pour décoder le deuxième signal dans une bande de fréquences codé en un deuxième signal dans une bande de fréquences décodé, le récepteur (14) comprenant en outre un combineur (30) pour combiner les premier et deuxième signaux dans une bande de fréquences décodés en un signal de sortie, le récepteur (14) comprenant en outre des moyens de reconstruction (48) pour reconstruire le deuxième signal dans une bande de fréquences décodé lorsque le deuxième signal dans une bande de fréquences décodé n'est pas disponible;
**caractérisé en ce que** les moyens de reconstruction (48) sont à même de reconstruire le deuxième signal dans une bande de fréquences décodé à partir du premier signal dans une bande de fréquences décodé.

2. Système de transmission audio (10) suivant la revendication 1, **caractérisé en ce que** les moyens de reconstruction (48) sont à même de reconstruire le deuxième signal dans une bande de fréquences décodé à partir du premier signal dans une bande de fréquences décodé en étalant une largeur de bande du premier signal dans une bande de fréquences décodé.

3. Système de transmission audio (10) suivant la revendication 1, **caractérisé en ce que** les moyens de reconstruction (48) sont à même de reconstruire une trame instantanée du deuxième signal dans une bande de fréquences décodé à partir d'une trame instantanée du premier signal dans une bande de fréquences décodé et à partir d'une trame antérieure du deuxième signal dans une bande de fréquences décodé.

4. Système de transmission audio (10) suivant la revendication 1, **caractérisé en ce que** le premier signal dans une bande de fréquences et le premier signal dans une bande de fréquences codé et le premier signal dans une bande de fréquences décodé sont des signaux ayant une bande de fréquences basses et **en ce que** le deuxième signal dans une bande de fréquences et le deuxième signal dans une bande de fréquences codé et le deuxième signal dans une bande de fréquences décodé sont des signaux ayant une bande de fréquences élevées.

5. Récepteur audio (14) pour recevoir par le biais d'un canal de transmission (16) des premier et deuxième signaux dans une bande de fréquences codés d'un émetteur audio (12), le récepteur audio (14) comprenant un premier décodeur (26) pour décoder le premier signal dans une bande de fréquences codé en un premier signal dans une bande de fréquences décodé et un deuxième décodeur (28) pour décoder le deuxième signal dans une bande de fréquences codé en un deuxième signal dans une bande de fréquences décodé, le récepteur (14) comprenant en outre un combineur (30) pour combiner les premier et deuxième signaux dans une bande de fréquences décodés en un signal de sortie, le récepteur audio (14) comprenant en outre des moyens de reconstruction (48) pour reconstruire le deuxième signal dans une bande de fréquences décodé lorsque le deuxième signal dans une bande de fréquences décodé n'est pas disponible;
**caractérisé en ce que** les moyens de reconstruction (48) sont à même de reconstruire le deuxième signal dans une bande de fréquences décodé à partir du premier signal dans une bande de fréquences décodé.

6. Récepteur audio (14) suivant la revendication 5, **caractérisé en ce que** les moyens de reconstruction (48) sont à même de reconstruire le deuxième signal dans une bande de fréquences décodé à partir du premier signal dans une bande de fréquences décodé en étalant une largeur de bande du premier signal dans une bande de fréquences décodé.

7. Récepteur audio (14) suivant la revendication 5, **caractérisé en ce que** les moyens de reconstruction (48) sont à même de reconstruire une trame instantanée du deuxième signal dans une bande de fréquences décodé à partir d'une trame instantanée du premier signal dans une bande de fréquences décodé et à partir d'une trame antérieure du deuxième signal dans une bande de fréquences décodé.

8. Récepteur audio (14) suivant la revendication 5, **caractérisé en ce que** le premier signal dans une bande de fréquences codé et le premier signal dans une bande de fréquences décodé sont des signaux ayant une bande de fréquences basses et **en ce que** le deuxième signal dans une bande de fréquences codé et le deuxième signal dans une bande de fréquences décodé sont des signaux ayant une bande de fréquences élevées.

9. Procédé de transmission d'un signal d'entrée audio par le biais d'un canal de transmission (16), le procédé comprenant les étapes suivantes :
- la séparation du signal d'entrée audio en au moins des premier et deuxième signaux dans une bande de fréquences;
- le codage du premier signal dans une bande de fréquences en un premier signal dans une bande de fréquences codé et le codage du deuxième signal dans une bande de fréquences en un deuxième signal dans une bande de fréquences codé;
- la transmission des premier et deuxième signaux dans une bande de fréquences codés par le biais du canal de transmission (16);
- le décodage du premier signal dans une bande de fréquences codé en un premier signal dans une bande de fréquences décodé et le décodage du deuxième signal dans une bande de fréquences codé en un deuxième signal dans une bande de fréquences décodé;
- la combinaison des premier et deuxième signaux dans une bande de fréquences décodés en un signal audio de sortie, et
- la reconstruction du deuxième signal dans une bande de fréquences décodé lorsque le deuxième signal dans une bande de fréquences décodé n'est pas disponible;
**caractérisé en ce que** le deuxième signal dans une bande de fréquences décodé est reconstruit à partir du premier signal dans une bande de fréquences décodé.

10. Procédé de transmission d'un signal d'entrée audio par le biais d'un canal de transmission (16) suivant la revendication 9, **caractérisé en ce que** le deuxième signal dans une bande de fréquences décodé est reconstruit à partir du premier signal dans une bande de fréquences décodé en étalant une largeur de bande du premier signal dans une bande de fréquences décodé.

11. Procédé de transmission d'un signal d'entrée audio par le biais d'un canal de transmission (16) suivant la revendication 9, **caractérisé en ce qu'**une trame instantanée du deuxième signal dans une bande de fréquences décodé est reconstruite à partir d'une trame instantanée du premier signal dans une bande de fréquences décodé et d'une trame antérieure du deuxième signal dans une bande de fréquences décodé.

12. Procédé de transmission d'un signal d'entrée audio par le biais d'un canal de transmission (16) suivant la revendication 9, **caractérisé en ce que** le premier signal dans une bande de fréquences et le premier signal dans une bande de fréquences codé et le premier signal dans une bande de fréquences décodé sont des signaux ayant une bande de fréquences basses et **en ce que** le deuxième signal dans une bande de fréquences et le deuxième signal dans une bande de fréquences codé et le deuxième signal dans une bande de fréquences décodé sont des signaux ayant une bande de fréquences élevées.

13. Procédé de réception, par le biais d'un canal de transmission (16), de premier et deuxième signaux dans une bande de fréquences codés représentant un signal audio, le procédé comprenant les étapes suivantes :
- le décodage du premier signal dans une bande de fréquences codé en un premier signal dans une bande de fréquences décodé et le décodage du deuxième signal dans une bande de fréquences codé en un deuxième signal dans une bande de fréquences décodé;
- la combinaison des premier et deuxième signaux dans une bande de fréquences décodés en un signal audio de sortie, et
- la reconstruction du deuxième signal dans une bande de fréquences décodé lorsque le deuxième signal dans une bande de fréquences décodé n'est pas disponible;
**caractérisé en ce que** le deuxième signal dans une bande de fréquences décodé est reconstruit à partir du premier signal dans une bande de fréquences décodé.

14. Procédé de réception, par le biais d'un canal de transmission (16), de premier et deuxième signaux dans une bande de fréquences codés suivant la revendication 13, **caractérisé en ce que** le deuxième signal dans une bande de fréquences décodé est reconstruit à partir du premier signal dans une bande de fréquences décodé en étalant une largeur de bande du premier signal dans une bande de fréquences décodé.

15. Procédé de réception, par le biais d'un canal de transmission (16), de premier et deuxième signaux dans une bande de fréquences codés suivant la revendication 13, **caractérisé en ce qu'**une trame instantanée du deuxième signal dans une bande de fréquences décodé est reconstruite à partir d'une trame instantanée du premier signal dans une bande de fréquences décodé et d'une trame antérieure du deuxième signal dans une bande de fréquences décodé.

16. Procédé de réception, par le biais d'un canal de transmission (16), de premier et deuxième signaux dans une bande de fréquences codés suivant la revendication 13, **caractérisé en ce que** le premier signal dans une bande de fréquences codé et le premier signal dans une bande de fréquences décodé sont des signaux ayant une bande de fréquences basses et **en ce que** le deuxième signal dans une bande de fréquences codé et le deuxième signal dans une bande de fréquences décodé sont des signaux ayant une bande de fréquences élevées.

17. Décodeur de parole (60) pour décoder des premier et deuxième signaux de parole dans une bande de fréquences codés, le décodeur de parole (60) comprenant un premier décodeur (26) pour décoder le premier signal de parole dans une bande de fréquences codé en un premier signal de parole dans une bande de fréquences décodé et un deuxième décodeur (28) pour décoder le deuxième signal de parole dans une bande de fréquences codé en un deuxième signal de parole dans une bande de fréquences décodé, le décodeur de parole (60) comprenant en outre un combineur (30) pour combiner les premier et deuxième signaux de parole dans une bande de fréquences décodés en un signal de sortie, le décodeur de parole (14) comprenant en outre des moyens de reconstruction (48) pour reconstruire le deuxième signal de parole dans une bande de fréquences décodé lorsque le deuxième signal dans une bande de fréquences décodé n'est pas disponible;
**caractérisé en ce que** les moyens de reconstruction (48) sont à même de reconstruire le deuxième signal de parole dans une bande de fréquences décodé à partir du premier signal de parole dans une bande de fréquences décodé.

18. Décodeur de parole (60) suivant la revendication 17, **caractérisé en ce que** les moyens de reconstruction (48) sont à même de reconstruire le deuxième signal de parole dans une bande de fréquences décodé à partir du premier signal de parole dans une bande de fréquences décodé en étalant une largeur de bande du premier signal de parole dans une bande de fréquences décodé.

19. Décodeur de parole (60) suivant la revendication 17, **caractérisé en ce que** les moyens de reconstruction (48) sont à même de reconstruire une trame instantanée du deuxième signal de parole dans une bande de fréquences décodé à partir d'une trame instantanée du premier signal de parole dans une bande de fréquences décodé et à partir d'une trame antérieure du deuxième signal de parole dans une bande de fréquences décodé.

20. Décodeur de parole (60) suivant la revendication 17, **caractérisé en ce que** le premier signal de parole dans une bande de fréquences codé et le premier signal de parole dans une bande de fréquences décodé sont des signaux ayant une bande de fréquences basses et **en ce que** le deuxième signal de parole dans une bande de fréquences codé et le deuxième signal de parole dans une bande de fréquences décodé sont des signaux ayant une bande de fréquences élevées.

## Patentansprüche

1. Audioübertragungssystem (10), das einen Sender (12) und einen Empfänger (14) umfasst, wobei der Sender (12) dazu eingerichtet ist, ein Eingangssignal über einen Übertragungskanal (16) an den Empfänger (14) zu übertragen,
wobei der Sender (12) einen Splitter (20) zum Aufteilen des Eingangssignals in mindestens ein erstes und ein zweites Frequenzbandsignal sowie weiterhin einen ersten Kodierer (22) zum Kodieren des ersten Frequenzbandsignals in ein erstes kodiertes Frequenzbandsignal und einen zweiten Kodierer (24) zum Kodieren des zweiten Frequenzbandsignals in ein zweites kodiertes Frequenzbandsignal umfasst und dazu eingerichtet ist, das erste und das zweite kodierte Frequenzbandsignal über den Übertragungskanal (16) an den Empfänger (14) zu übertragen,
wobei der Empfänger (14) einen ersten Dekodierer (26) zum Dekodieren des ersten kodierten Frequenzbandsignals in ein erstes dekodiertes Frequenzbandsignal und einen zweiten Dekodierer (28) zum Dekodieren des zweiten kodierten Frequenzbandsignals in ein zweites dekodiertes Frequenzbandsignal sowie weiterhin einen Kombinator (30) zum Kombinieren des ersten und des zweiten dekodierten Frequenzbandsignals zu einem Ausgangssignal und weiterhin Rekonstruktionsmittel (48) umfasst, die dazu dienen, das zweite dekodierte Frequenzbandsignal zu rekonstruieren, wenn es nicht verfügbar ist,
**dadurch gekennzeichnet, dass** die Rekonstruktionsmittel (48) zum Rekonstruieren des zweiten dekodierten Frequenzbandsignals aus dem ersten dekodierten Frequenzbandsignal eingerichtet sind.

2. Audioübertragungssystem (10) nach Anspruch 1, **dadurch gekennzeichnet, dass** die Rekonstruktionsmittel (48) zum Rekonstruieren des zweiten dekodierten Frequenzbandsignals aus dem ersten dekodierten Frequenzbandsignal mittels Erweiterung der Bandbreite des ersten dekodierten Frequenzbandsignals eingerichtet sind.

3. Audioübertragungssystem (10) nach Anspruch 1, **dadurch gekennzeichnet, dass** die Rekonstruktionsmittel (48) zum Rekonstruieren eines aktuellen Rahmens des zweiten dekodierten Frequenzbandsignals aus einem aktuellen Rahmen des ersten dekodierten Frequenzbandsignals und aus einem vorherigen Rahmen des zweiten dekodierten Frequenzbandsignals eingerichtet sind.

4. Audioübertragungssystem (10) nach Anspruch 1, **dadurch gekennzeichnet, dass** das erste Frequenzbandsignal und das erste kodierte Frequenzbandsignal und das erste dekodierte Frequenzbandsignal Signale sind, die ein niedriges Frequenzband aufweisen, und dass das zweite Frequenzbandsignal und das zweite kodierte Frequenzbandsignal und das zweite dekodierte Frequenzbandsignal Signale sind, die ein hohes Frequenzband aufweisen.

5. Audioempfänger (14) zum Empfangen eines ersten und eines zweiten kodierten Frequenzbandsignals von einem Audiosender (12) über einen Übertragungskanal (16), wobei der Audioempfänger (14) einen ersten Dekodierer (26) zum Dekodieren des ersten kodierten Frequenzbandsignals in ein erstes dekodiertes Frequenzbandsignal und einen zweiten Dekodierer (28) zum Dekodieren des zweiten kodierten Frequenzbandsignals in ein zweites dekodiertes Frequenzbandsignal umfasst, wobei der Empfänger (14) weiterhin einen Kombinator (30) zum Kombinieren des ersten und des zweiten dekodierten Frequenzbandsignals zu einem Ausgangssignal und weiterhin Rekonstruktionsmittel (48) umfasst, die dazu dienen, das zweite dekodierte Frequenzbandsignal zu rekonstruieren, wenn es nicht verfügbar ist,
**dadurch gekennzeichnet, dass** die Rekonstruktionsmittel (48) zum Rekonstruieren des zweiten dekodierten Frequenzbandsignals aus dem ersten dekodierten Frequenzbandsignal eingerichtet sind.

6. Audioempfänger (14) nach Anspruch 5, **dadurch gekennzeichnet, dass** die Rekonstruktionsmittel (48) zum Rekonstruieren des zweiten dekodierten Frequenzbandsignals aus dem ersten dekodierten Frequenzbandsignal mittels Erweiterung der Bandbreite des ersten dekodierten Frequenzbandsignals eingerichtet sind.

7. Audioempfänger (14) nach Anspruch 5, **dadurch gekennzeichnet, dass** die Rekonstruktionsmittel (48) zum Rekonstruieren eines aktuellen Rahmens des zweiten dekodierten Frequenzbandsignals aus einem aktuellen Rahmen des ersten dekodierten Frequenzbandsignals und aus einem vorherigen Rahmen des zweiten dekodierten Frequenzbandsignals eingerichtet sind.

8. Audioempfänger (14) nach Anspruch 5, **dadurch gekennzeichnet, dass** das erste kodierte Frequenzbandsignal und das erste dekodierte Frequenzbandsignal Signale sind, die ein niedriges Frequenzband aufweisen, und dass das zweite kodierte Frequenzbandsignal und das zweite dekodierte Frequenzbandsignal Signale sind, die ein hohes Frequenzband aufweisen.

9. Verfahren zum Übertragen eines Audioeingangssignals über einen Übertragungskanal (16), das folgende Schritte umfasst:
- Aufteilen des Audioeingangssignals in mindestens ein erstes und ein zweites Frequenzbandsignal,
- Kodieren des ersten Frequenzbandsignals in ein erstes kodiertes Frequenzbandsignal und Kodieren des zweiten Frequenzbandsignals in ein zweites kodiertes Frequenzbandsignal,
- Übertragen des ersten und des zweiten kodierten Frequenzbandsignals über den Übertragungskanal (16),
- Dekodieren des ersten kodierten Frequenzbandsignals in ein erstes dekodiertes Frequenzbandsignal und Dekodieren des zweiten kodierten Frequenzbandsignals in ein zweites dekodiertes Frequenzbandsignal,
- Kombinieren des ersten und des zweiten kodierten Frequenzbandsignals zu einem Audioausgangssignal und
- Rekonstruieren des zweiten dekodierten Frequenzbandsignals, wenn es nicht verfügbar ist,
**dadurch gekennzeichnet, dass** das zweite dekodierte Frequenzbandsignal aus dem ersten dekodierten Frequenzbandsignal rekonstruiert wird.

10. Verfahren zum Übertragen eines Audioeingangssignals über einen Übertragungskanal (16) nach Anspruch 9, **dadurch gekennzeichnet, dass** das zweite dekodierte Frequenzbandsignal aus dem ersten dekodierten Frequenzbandsignal mittels Erweiterung einer Bandbreite des ersten dekodierten Frequenzbandsignals rekonstruiert wird.

11. Verfahren zum Übertragen eines Audioeingangssignals über einen Übertragungskanal (16) nach Anspruch 9, **dadurch gekennzeichnet, dass** ein aktuelle Rahmen des zweiten dekodierten Frequenzbandsignals aus einem aktuellen Rahmen des ersten dekodierten Frequenzbandsignals und aus einem vorherigen Rahmen des zweiten dekodierten Frequenzbandsignals rekonstruiert wird.

12. Verfahren zum Übertragen eines Audioeingangssignals über einen Übertragungskanal (16) nach Anspruch 9, **dadurch gekennzeichnet, dass** das erste Frequenzbandsignal und das erste kodierte Frequenzbandsignal und das erste dekodierte Frequenzbandsignal Signale sind, die ein niedriges Frequenzband aufweisen, und dass das zweite Frequenzbandsignal und das zweite kodierte Frequenzbandsignal und das zweite dekodierte Frequenzbandsignal Signale sind, die ein hohes Frequenzband aufweisen.

13. Verfahren zum Empfangen eines ersten und eines zweiten kodierten Frequenzbandsignals, die ein Audiosignal darstellen, über einen Übertragungskanal (16), das folgende Schritte umfasst:
- Dekodieren des ersten kodierten Frequenzbandsignals in ein erstes dekodiertes Frequenzbandsignal und Dekodieren des zweiten kodierten Frequenzbandsignals in ein zweites dekodiertes Frequenzbandsignal,
- Kombinieren des ersten und des zweiten dekodierten Frequenzbandsignals zu einem Ausgangssignal und
- Rekonstruieren des zweiten dekodierten Frequenzbandsignals, wenn es nicht verfügbar ist,
**dadurch gekennzeichnet, dass** das zweite dekodierte Frequenzbandsignal aus dem ersten dekodierten Frequenzbandsignal rekonstruiert wird.

14. Verfahren zum Empfangen eines ersten und eines zweiten kodierten Frequenzbandsignals über einen Übertragungskanal (16) nach Anspruch 13, **dadurch gekennzeichnet, dass** das zweite dekodierte Frequenzbandsignal aus dem ersten dekodierten Frequenzbandsignal mittels Erweiterung einer Bandbreite des ersten dekodierten Frequenzbandsignals rekonstruiert wird.

15. Verfahren zum Empfangen eines ersten und eines zweiten kodierten Frequenzbandsignals über einen Übertragungskanal (16) nach Anspruch 13, **dadurch gekennzeichnet, dass** ein aktueller Rahmen des zweiten dekodierten Frequenzbandsignals aus einem aktuellen Rahmen des ersten dekodierten Frequenzbandsignals und aus einem vorherigen Rahmen des zweiten dekodierten Frequenzbandsignals rekonstruiert wird.

16. Verfahren zum Empfangen eines ersten und eines zweiten kodierten Frequenzbandsignals über einen Übertragungskanal (16) nach Anspruch 13, **dadurch gekennzeichnet, dass** das erste kodierte Frequenzbandsignal und das erste dekodierte Frequenzbandsignal Signale sind, die ein niedriges Frequenzband aufweisen, und dass das zweite kodierte Frequenzbandsignal und das zweite dekodierte Frequenzbandsignal Signale sind, die ein hohes Frequenzband aufweisen.

17. Sprachdekodierer (60) zum Dekodieren eines ersten und eines zweiten kodierten Frequenzband-Sprachsignals, wobei der Sprachdekodierer (60) einen ersten Dekodierer (26) zum Dekodieren des ersten kodierten Frequenzband-Sprachsignals in ein erstes dekodiertes Frequenzband-Sprachsignal und einen zweiten Dekodierer (28) zum Dekodieren des zweiten kodierten Frequenzband-Sprachsignals in ein zweites dekodiertes Frequenzband-Sprachsignal sowie weiterhin einen Kombinator (30) zum Kombinieren des ersten und des zweiten dekodierten Frequenzband-Sprachsignals zu einem Ausgangssignal und weiterhin Rekonstruktionsmittel (48) umfasst, die dazu dienen, das zweite dekodierte Frequenzband-Sprachsignal zu rekonstruieren, wenn es nicht verfügbar ist,
**dadurch gekennzeichnet, dass** Rekonstruktionsmittel (48) zum Rekonstruieren des zweiten dekodierten Frequenzband-Sprachsignals aus dem ersten dekodierten Frequenzband-Sprachsignal eingerichtet sind.

18. Sprachdekodierer (60) nach Anspruch 17, **dadurch gekennzeichnet, dass** die Rekonstruktionsmittel (48) zum Rekonstruieren des zweiten dekodierten Frequenzband-Sprachsignals aus dem ersten dekodierten Frequenzband-Sprachsignal mittels Erweiterung der Bandbreite des ersten dekodierten Frequenzband-Sprachsignals eingerichtet sind.

19. Sprachdekodierer (60) nach Anspruch 17, **dadurch gekennzeichnet, dass** die Rekonstruktionsmittel (48) zum Rekonstruieren eines aktuellen Rahmens des zweiten dekodierten Frequenzband-Sprachsignals aus einem aktuellen Rahmen des ersten dekodierten Frequenzband-Sprachsignals und aus einem vorherigen Rahmen des zweiten dekodierten Frequenzband-Sprachsignals eingerichtet sind.

20. Sprachdekodierer (60) nach Anspruch 17, **dadurch gekennzeichnet, dass** das erste kodierte Frequenzband-Sprachsignal und das erste dekodierte Frequenzband-Sprachsignal Signale sind, die ein niedriges Frequenzband aufweisen, und dass das zweite kodierte Frequenzband-Sprachsignal und das zweite dekodierte Frequenzband-Sprachsignal Signale sind, die ein hohes Frequenzband aufweisen.
